## Europäisches Patentamt
## European Patent Office
## Office européen des brevets

(19)

(11) Veröffentlichungsnummer: **0 018 944**
**B1**

(12)

# EUROPÄISCHE PATENTSCHRIFT

(45) Veröffentlichungstag der Patentschrift:
**11.07.84**

(51) Int. Cl.³: **B 67 B 3/20,** B 65 B 7/28

(21) Anmeldenummer: **80810128.1**

(22) Anmeldetag: **17.04.80**

(54) **Verschliessvorrichtung zum Aufschrauben eines Kunststoff-Schraubverschlusses.**

(30) Priorität: **25.04.79 CH 3885/79**

(43) Veröffentlichungstag der Anmeldung:
**12.11.80 Patentblatt 80/23**

(45) Bekanntmachung des Hinweises auf die Patenterteilung:
**11.07.84 Patentblatt 84/28**

(84) Benannte Vertragsstaaten:
**AT BE DE FR GB IT LU NL SE**

(56) Entgegenhaltungen:
**CH - A - 313 871**
**US - A - 2 481 172**
**US - A - 3 899 762**

(73) Patentinhaber: **Albert Obrist AG, Römerstrasse 83, CH-4153 Reinach (CH)**

(72) Erfinder: **Obrist, Albert, Alte Therwilerstrasse 12, CH-4153 Reinach (CH)**

(74) Vertreter: **Hepp, Dieter, HEPP & Partner AG Marktgasse 18, CH-9500 Wil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Verschliessvorrichtung zum Aufschrauben eines Kunststoff-Schraubverschlusses auf einen mit Schraubgewinde versehenen Behälter, welche einerseits durch eine Antriebseinrichtung antreibbar ist und anderseits mit einem Aufschraubkopf zum Aufschrauben des Schraubverschlusses versehen ist, wobei zwischen Aufschraubkopf und Antriebseinrichtung eine drehmomentbegrenzende Kupplung angeordnet ist, die den Aufschraubvorgang beim Erreichen eines vorbestimmbaren Soll-Drehmoments unterbricht, wobei die Kupplung ein antriebsseitiges Kupplungsteil und ein abtriebsseitiges, mit dem Aufschraubkopf verbundenes Kupplungsteil aufweist.

Verschliessvorrichtungen zum Aufschrauben von Schraubverschlüssen sind in verschiedenen Ausführungsformen bekannt und gebräuchlich. Um ein zu festes Aufschrauben des Schraubverschlusses und eine dabei möglicherweise eintretende Beschädigung zu vermeiden, sind derartige Verschliessvorrichtungen mit einer drehmomentabhängigen Kupplung versehen, welche das maximal übertragbare Drehmoment begrenzen.

In der Praxis finden dabei praktisch ausschliesslich Rutschkupplungen Anwendung. Derartige Rutschkupplungen sind z.B. aus der deutschen Offenlegungsschrift 2 436 993 ersichtlich. Auch mechanische Drehmoment-Begrenzungsanordnungen sind bereits vorgeschlagen worden, wie dies z.B. aus der US-PS 3 405 499 ersichtlich ist.

Schwierigkeiten ergeben sich bei den bekannten Verschliessvorrichtungen vor allem aus der Funktion der Kupplungen, welche verschleissanfällig sind und die vor allem bei den schwankenden Umgebungsbedingungen, welche Flaschenabfüllanlagen ausgesetzt sind, einen grossen Streubereich hinsichtlich der Maximal-Drehmomentwerte aufweist. Die Kupplungsanordnungen sind ausserdem aufwendig in der Konstruktion, bedürfen häufiger Justierung und Einstellung und sind störanfällig.

Es sind auch bereits Kupplungen für derartige Zwecke benutzt worden, die nach dem Wirbelstromprinzip arbeiten. Dabei trägt in der Regel nur eine Kupplungsscheibe Magnete, die bei Rotation Wirbelströme in die gegenüberliegende Kupplungsscheibe induzieren. Diese kann z.B. aus Weicheisen oder aus Aluminium sein. Der entscheidende Nachteil dieser Kupplungen besteht darin, dass die Wirbelstromerzeugung von der Differenzgeschwindigkeit der beiden Kupplungsscheiben abhängt. Damit ergibt sich ein während des Aufschraubvorgangs ansteigender Drehmomentverlauf, dessen Steigung und Endwert von der Antriebsdrehzahl abhängig ist. Dies ist für das Einsatzgebiet der Erfindung ungeeignet. Ausserdem sind solche Kupplungen störanfällig, da ein manchmal unvermeidbares kurzes Durchdrehen der Flasche beim Aufschrauben das übertragbare Drehmoment (Differenzgeschwindigkeit der Wirbelstrombremse) unmittelbar beeinflusst.

Der Erfindung liegt die Aufgabe zugrunde, die Nachteile des bekannten zu vermeiden, insbesondere also eine neue Verschliessvorrichtung der eingangs beschriebenen Art zu schaffen, welche unabhängig von Umgebungseinflüssen ein konstantes Drehmoment überträgt und einfach in der Konstruktion ist und keine Justierung erforderlich macht.

Erfindungsgemäss wird dies durch eine Verschliessvorrichtung erreicht, welche die Merkmale im Kennzeichen von Patentanspruch 1 aufweist. Die Verwendung von Magnetkupplungen für dieses Einsatzgebiet ist bisher trotz des seit mehr als zwanzig Jahren bestehenden und erkannten Problems nicht vorgeschlagen worden. Dies dürfte in erster Linie darin liegen, dass der bei Magnetkupplungen während des Durchdrehens zu beobachtende wechselnde Drehmomentverlauf sowie die Drehmoment-Toleranzen bei Magnet-Abstandsänderungen derartige Magnetkupplungen als scheinbar nicht geeignet erscheinen liessen. Erfindungsgemäss hat sich jedoch gezeigt, dass Magnetkupplungen hervorragend zum Einsatz als Kupplungen mit Drehmoment-Begrenzung bei Verschliessvorrichtungen geeignet sind.

Durch die erfindungsgemässe Anordnung lassen sich die Rotations-Trägheitsmomente des abtriebsseitigen Kupplungsteils reduzieren. Ausserdem wird durch die auf beiden Kupplungsteilen vorgesehenen Magnete erreicht, dass beim Durchdrehen des abtriebsseitigen Kupplungsteils jeweils ein geringerer Drehmomentabfall von Pol zu Pol auftritt. Dazu ist ein Magnet-Polkranz mit jeweils abwechselnder Polarität der Magnetpole vorgesehen. Ein ausreichend gleichmässiger Drehmomentverlauf, der jedes «Rattern» der abtriebsseitigen Kupplungsscheibe beim Durchdrehen der Kupplungen vermeidet, wird vorteilhafterweise erreicht, wenn die Kupplungsteile wenigstens 8 und vorzugsweise wenigstens 12 Magnete aufweisen.

Eine besonders platzsparende und einfache Anordnung der Magnete ergibt sich, wenn diese etwa zylindrisch ausgebildet sind.

Besonders stabile und verschleissfeste Anordnung lässt sich erreichen, wenn die Kupplungsscheibe eine konzentrisch verlaufende Schulter aufweist, an welcher die Magnete seitlich anliegen und dadurch abgestützt werden.

Stabile Halterung an der Kupplungsscheibe und weitere Verbesserung der Betriebssicherheit lässt sich erreichen, wenn die Magnete in einem Bett aus aushärtendem Kunststoff gegossen sind. Vor allem die Gefahr von magnetischen Nebenschlüssen durch Verunreinigung mit Eisenspänen und dergleichen werden auf diese Weise zuverlässig ausgeschlossen.

Ausserdem wird die Lagerung der Magnete dadurch stossunempfindlich und im Beschädigungsfall lässt sich eine derart vergossene Magnetanordnung einfach austauschen.

Besonders platzsparende und stabile Anordnung ergibt sich, wenn das Kunststoffbett etwa ringförmig ausgebildet ist und sich von der konzentrisch verlaufenden Schulter der Kupplungsscheibe bis zu einem ausserhalb der Magnete verlaufenden und die Magnete einschliessenden äusseren Rand erstreckt.

Weitere Verbesserung der Stabilität lässt sich erreichen und jede Beschädigung beim Zusammenbau vermeiden, wenn die Magnete wenigstens einer Kupplungsscheibe an der der anderen Kupplungsscheibe zugewandten Fläche mit einer magnetisch nichtleitenden Abdeckung versehen sind. In der Praxis hat sich hier besonders Messing bewährt. Insbesondere beim Einsatz von Oxid-Magneten verhindert eine derartige Abdekkung eine Beschädigung der Magnete durch Stoss oder z.B. auch ein Lösen der Magnete aus dem Kunststoffbett. Besonders vorteilhaft lässt sich eine derartige Anordnung realisieren, wenn die Abdeckung einen aussen umlaufenden Ring aufweist, welcher die im Kunststoffbett eingegossenen Magnete umgibt und auch am Umfang schützt. Erfindungsgemäss hat sich gezeigt, dass die Magnetkupplung besonders konstant und verschleissunabhängig gleichmässiges Drehmoment überträgt, wenn der Abstand zwischen den Magneten der beiden Kupplungsscheiben wenigstens 4 mm beträgt. Auf diese Weise werden Abstandsschwankungen, z.B. durch Lagerspiel der axialen Lagerung zwischen den beiden Kupplungsscheiben nur in einer Weise wirksam, welche das durch die Magnete bewirkte Drehmoment nur geringfügig beeinflussen. Besonders vorteilhaft lässt sich die Erfindung realisieren, wenn der Abstand wenigstens das sechsfache des axialen Lagerspiels zwischen Antriebsseite und Abtriebsseite beträgt. Bekanntlich nehmen die Kräfte zwischen den Magneten bei Abstandsverringerungen exponentiell wenigstens im Quadrat zur Entfernung zu, bzw. ab. Je grösser deshalb das Verhältnis zwischen Lagerspiel und Luftspalte ist, desto geringer wirken sich Toleranzen und Schwankungen im Abstand zwischen den beiden Kupplungsscheiben auf.

Die Erfindung ist im folgenden in einem Ausführungsbeispiel anhand der Zeichnungen näher erläutert. Es zeigen:

Fig. 1 eine Verschliessvorrichtung mit den Merkmalen der Erfindung im Schnitt,

Fig. 2 die Abtriebsseitige Kupplungsscheibe aus Fig. 1 in Draufsicht,

Fig. 3 die Kupplungsscheibe gemäss Fig. 2 im Schnitt,

Fig. 4 eine schematische Darstellung von Axial-Spiel und Toleranzen der Kupplung und

Fig. 5 eine schematische Darstellung des Einflusses von Spiel und Toleranzen auf das Drehmoment.

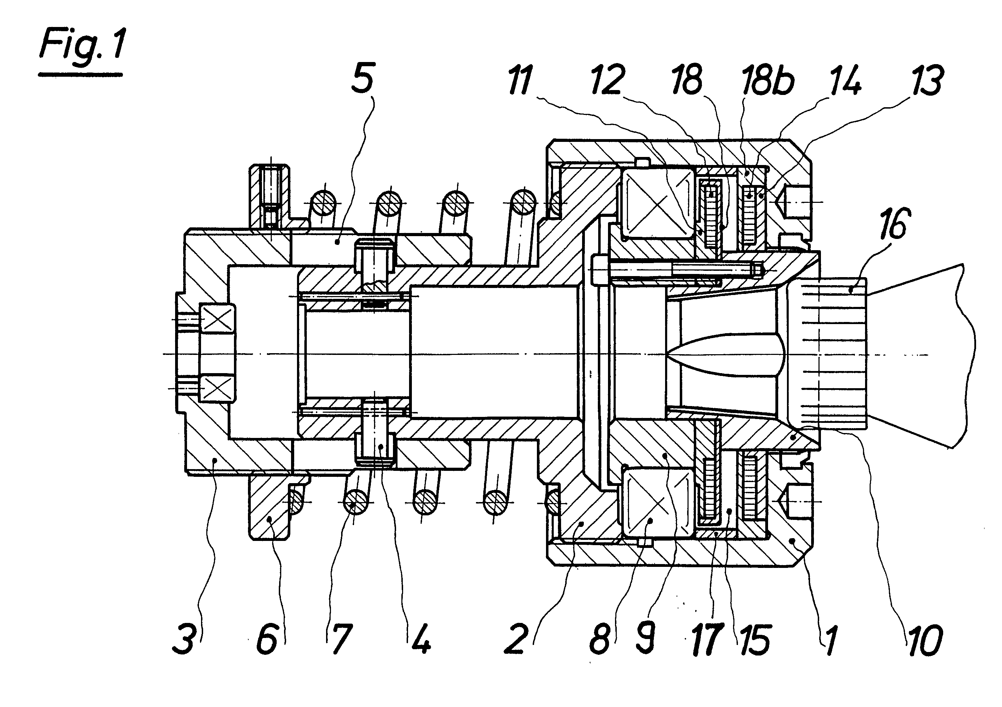

Gemäss Fig. 1 weist die dargestellte Verschliessvorrichtung ein äusseres Kupplungsteil 1 auf, welches auf ein zylindrisches Zentralteil 2 aufgeschraubt ist. Das Zentralteil 2 ist axial verschiebbar an einem antriebsseitigen Anschlussteil 3 befestigt, welches in bekannter Weise an eine nichtdargestellte Antriebseinrichtung angeflanscht werden kann. Am Zentralteil 2 sind Stifte 4 vorgesehen, welche in Längsschlitzen 5 des Anschlussteils 3 verschiebbar sind. Am Anschlussteil 3 ist ausserdem eine umlaufende Schulter 6 vorgesehen, welche eine Feder 7 abstützt, die anderseits am Zentralteil 2 anliegt. Ersichtlicherweise kann dadurch das Zentralteil 2 in Längsrichtung gegen die Kraft der Feder 7 teleskopartig im Anschlussteil 3 verschoben werden, wobei durch die in den Längsschlitzen 5 gleitenden Stifte 4 sowohl der Längshub begrenzt wird, als auch das Drehmoment vom Anschlussteil 3 auf das Zentralteil 2 übertragen wird.

Die Feder 7 und die Längsbewegbarkeit des äusseren Kupplungsteils 1 gegenüber dem Anschlussteil 3 ist in bekannter Weise deshalb vorgesehen, um die Kupplung beim Aufsetzvorgang an Toleranzen in der Flaschenhöhe anzupassen und um insbesondere auch den Weg des Schraubverschlusses beim Aufschrauben auf die Flasche aufzunehmen. Selbstverständlich kann statt der Feder 7 auch eine andere Ausgleichsvorrichtung, z.B. hydraulischer Art, vorgesehen werden. Die Ausgleichsvorrichtung ist ohne Einfluss auf die vorliegende Erfindung.

Im Zentralteil 2 ist ein Wälzlager 8 angeordnet, welches ein inneres Kupplungsteil 9 trägt. Das innere Kupplungsteil 9 ist mit einem konisch ausgebildeten Aufschraubkopf 10 versehen, der in bekannter Weise zur Aufnahme eines Schraubverschlusses 16 und zu dessen form- und/oder kraftschlüssigem Ergreifen während des Aufschraubvorgangs ausgebildet ist. Der im Wälzlager 8 drehbar gelagerte Aufschraubkopf 10 ist mit einer abtriebsseitigen Kupplungsscheibe 11 verbunden, welche eine Vielzahl von Permanent-Magneten 12 trägt. Das äussere Kupplungsteil 1 ist anderseits mit einer antriebsseitigen Kupplungsscheibe 13 versehen, auf welcher ebenfalls eine Vielzahl von Permanent-Magneten 14 angeordnet ist. Zwischen den beiden Kupplungsscheiben 11 und 13 befindet sich ein Luftspalt 15.

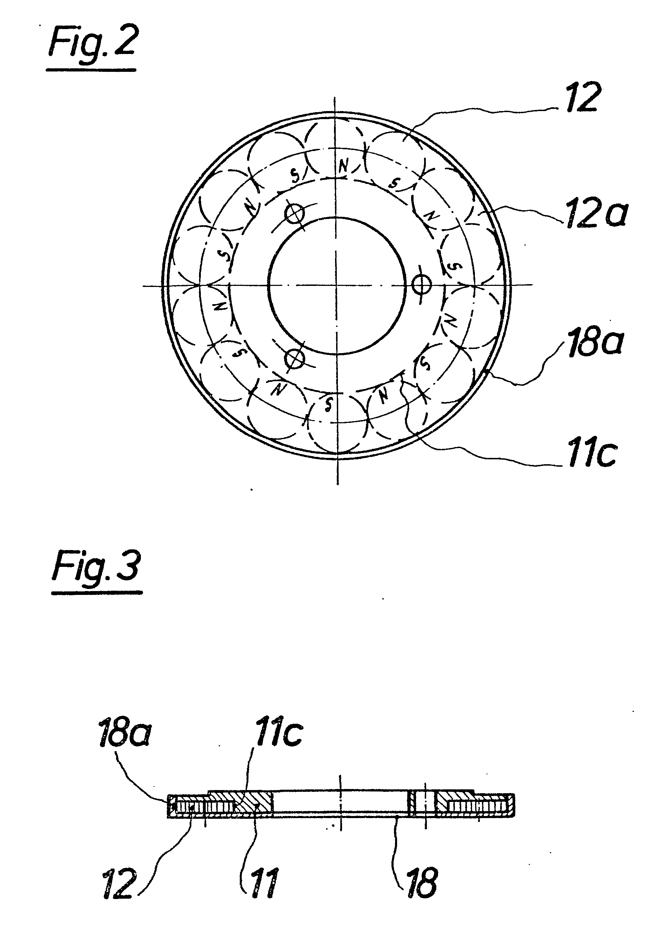

Wie aus Fig. 2 und 3 ersichtlich ist, sind die Magnete 12 scheibenförmige Oxidmagnete, welche auf einem konzentrischen Kreis auf der Kupplungsscheibe 11 angeordnet sind. Die Polaritäten der Magnete 12 wechseln dabei derart ab, dass abwechselnd ein Nordpol und ein Südpol aufeinander folgt. Die Zwischenräume 12a zwischen den Magneten 12 sind vollständig mit einem erhärtenden Kunststoff (Epoxidharz) ausgegossen und die Kupplungsscheibe 11 ist nach oben durch eine Abdeckung 18 aus Messing abgedeckt, welche in einen Ring 18a übergeht, welcher die Kupplungsscheibe 11 und die Magnete 12 am Umfang umgibt. Die Magnete sind damit sowohl gegen Stoss gesichert, als auch mechanisch fest zwischen der Schulter 11c der Kupplungsscheibe 11 einerseits und dem Ring 18a der Abdeckung anderseits gehalten.

Die nicht in Ansicht dargestellte antriebsseitige Kupplungsscheibe 13 ist in der Konfiguration identisch mit der Kupplungsscheibe 11. Dementsprechend wird sich die abtriebsseitige Kupplungsscheibe 11, die am inneren Kupplungsteil 9 befestigt und mit diesem im Wälzlager 8 frei drehbar

**0 018 944**

gelagert ist, im Ruhezustand in eine Position einstellen, bei welcher sich jeweils Nord/Südmagnete der beiden Kupplungsscheiben 11 und 13 gegenüberliegen. Die Anziehungskraft zwischen den beiden Kupplungsscheiben wird durch die Dimensionierung der Magnete sowie die Grösse des Luftspalts 15 bestimmt. Die Dimensionierung der Magnetanordnung in Abhängigkeit vom Soll-Drehmoment ist Stand der Technik und dem Fachmann geläufig. Durch die grosse Anzahl von Magneten auf jeder Kupplungsscheibe 11, 13 wird vorteilhaft sichergestellt, dass bei einer Drehung der beiden Kupplungsscheiben 11, 13 gegeneinander der Abstand zwischen zwei aufeinanderfolgenden Polen derart gering ist, dass ein «Rattern» der Kupplungsscheibe 11, bzw. des Aufschraubkopfs 10 vermieden wird. Dadurch können Beschädigungen des Schraubverschlusses 16 ausgeschlossen werden. Besonders bewährt haben sich dabei Kupplungsanordnungen mit zehn bis vierzehn Magneten.

Durch das Eingiessen der Magnete 12, bzw. 14 im Ringspalt zwischen der Abdeckung 18 und der Kupplungsscheibe 11 wird auf optimal einfache Weise ein Kupplungsbauteil geschaffen, bei dem die Magnete gegenüber mechanischen Beanspruchungen, z.B. durch Stoss beim Zusammenbau, geschützt sind. Ausserdem wird durch das Eingiessen der Magnete 12 (und 14, nichtdargestellt) in Kunststoff sichergestellt, dass nicht nachträglich durch Verunreinigungen, z.B. Metallspäne und dergleichen, ein Nebenschluss zwischen den Magneten entsteht, welcher die im Luftspalt 15 wirkende Kraft beeinträchtigen könnte.

Der Luftspalt 15 zwischen den Magneten 12 und 14 beträgt beim Ausführungsbeispiel etwa 4 mm. Der effektive Abstand zwischen den Magneten beträgt jedoch ca. 6 mm, da die Messing-Abdeckung 18 sich ebenfalls im Raum zwischen den Magneten 12 und 14 befinden. durch diesen relativ grossen Abstand wird vorteilhafterweise sichergestellt, dass Lagertoleranzen und Spiel in der Gesamtanordnung nur unbedeutenden Einfluss auf das übertragbare Drehmoment haben.

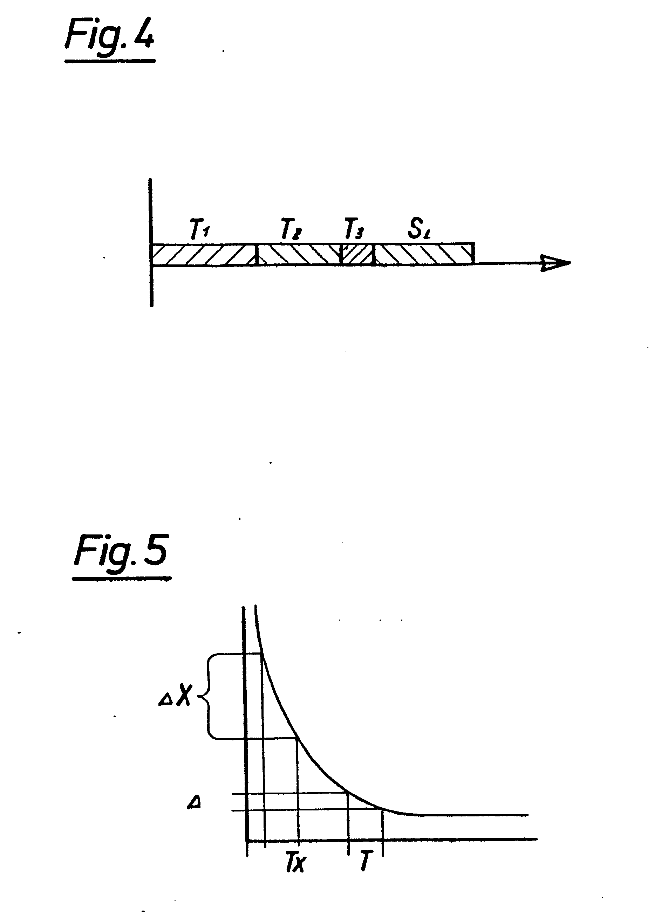

Aus Fig. 4 ist ersichtlich, wie sich die Toleranzen von Abtriebsseite (Kupplungsscheibe 11, Abdeckung 18), Antriebsseite (Kupplungsscheibe 13, Abdeckung 18, Abstandsring 17) und die Toleranz des Wälzlagers 8 sowie dessen Spiel addieren. Wesentlich ist es, dass bei der Dimensionierung der Kupplungsanordnung der Abstand zwischen den Magneten 12 und 14 wenigstens sechsmal so gross ist wie die Toleranzen T1 (Antriebsseite), T2 (Abtriebsseite), T3 (Wälzlager) sowie das Wälzlagerspiel SL (Fig. 4). Dadurch wird gewährleistet, dass auf vorteilhafte Weise der Drehmomentverlauf durch Bauteiltoleranzen nur in geringem Masse beeinflusst wird. Dies erübrigt spezielle Anpassung der Kupplung und der Kupplungsbauteile im Rahmen des Herstellungsvorgangs und erlaubt wirtschaftliche Serienfertigung der Verschliessvorrichtung. In der Praxis hat sich ausserdem gezeigt, dass diese Dimensionierung erst den praktischen Einsatz der Kupplung ermöglicht. Da bei Verschliessvorrichtungen für Flaschenverschlüsse durch die vertikale Belastung des Aufschraubkopfs 10 gegen den Druck der Feder 7 eine starke axiale Belastung sämtlicher beweglicher Teile, einschliesslich der die Toleranzen T1 bis T3 und das Spiel SL beeinflussenden Teile auftritt, ist im Gegensatz zu den üblicherweiser stationär angeordneten herkömmlichen Magnetkupplungen eine Veränderung der Toleranzen T1 bis T3 und des Spiels S1 durch Verschleisserscheinungen zu beobachten. Der Einsatz von Magnetkupplungen, deren Kraftübertragungs-Charakteristik ausschlaggebend vom Luftspalt, bzw. vom Wirkabstand zwischen den Magnetreihen abhängt, wurde unter anderem deshalb für Verschliessvorrichtungen für nicht möglich erachtet.

Fig. 5 zeigt ein schematisches Diagramm, welches den Verlauf der Drehmoment-Übertragungscharakteristik der Kupplungsanordnung in Abhängigkeit vom Toleranzfeld (einschliesslich zusätzlicher Toleranzen durch Verschleisserscheinungen) darstellt. Daraus ist ersichtlich, dass durch die Wahl des grossen Luftspalts, bzw. des Abstands zwischen den Magnetreihen der Drehmomentverlauf kaum beeinflusst wird. Drehmomentänderungen treten demnach bei Schwankungen T des Axialabstands nur ausserordentlich geringfügig auf. Eine derartige Dimensionierung liegt dem Fachmann an sich fern, da der Fachmann normalerweise bestrebt sein wird, den Luftspalt so gering als möglich zu halten, um möglichst grosse Kraft, bzw. Drehmomentübertragung zu erreichen und die Magnete 12 und 14 klein dimensionieren zu können. Von diesem Prinzip rückt die Erfindung bewusst ab und schlägt einen Luftspalt, bzw. einen Abstand zwischen den Magnetreihen vor, welcher wenigstens sechsmal grösser ist als die maximal zu erwartenden Toleranzen in Axialrichtung.

Der Einfluss von Schwankungen Tx des Axialabstands auf das Drehmoment Δx bei einer derartigen «konventionellen» Auslegung ist in Fig. 5 ebenfalls angedeutet.

Ersichtlicherweise schafft die Erfindung damit eine Verschliessvorrichtung, die einfach im Aufbau ist, die sich in der Serienherstellung wirtschaftlich fertigen lässt und die darüber hinaus verschliessfrei ist und gleichmässigen Drehmomentverlauf sichert.

**Patentansprüche**

1. Verschliessvorrichtung zum Aufschrauben eines Kunststoff-Schraubverschlusses (16) auf einen mit Schraubgewinde versehenen Behälter, welche einerseits durch eine Antriebseinrichtung antreibbar ist und anderseits mit einem Aufschraubkopf (10) zum Aufschrauben des Schraubverschlusses (16) versehen ist, wobei zwischen Aufschraubkopf (10) und Antriebseinrichtung eine drehmomentbegrenzende Kupplung (11, 13) angeordnet ist, die den Aufschraubvorgang beim Erreichen eines vorbestimmbaren Soll-Drehmoments unterbricht, wobei die Kupplung (11, 13) ein antriebsseitiges Kupplungsteil (13) und ein abtriebsseitiges, mit dem Aufschraubkopf (10) verbundenes Kupplungsteil (11) aufweist, dadurch gekennzeichnet, dass die Kupplungsteile (11, 13) im Abstand voneinander angeordnet sind und an den einander zugewandten Flächen Permanentmagnete (12, 14) aufweisen, deren Pole derart angeordnet sind, dass in unbelastetem Zustand Pole entgegengesetzter Polarität einander gegenüberstehen, und dass die nebeneinander liegenden Pole eines Kupplungsteils (11, 13) ebenfalls entgegengesetzte Polarität aufweisen.

2. Verschliessvorrichtung nach Anspruch 1, dadurch gekennzeichnet, dass die Kupplungsteile (11, 13) scheibenförmig sind.

3. Verschliessvorrichtung nach Anspruch 2, dadurch gekennzeichnet, dass wenigstens acht, vorzugsweise wenigstens zwölf Magnete (12, 14) auf jeder Kupplungsscheibe (11, 13) angeordnet sind.

4. Verschliessvorrichtung nach Anspruch 2 oder 3, dadurch gekennzeichnet, dass die Kupplungsscheibe (11, 13) eine konzentrisch verlaufende Schulter (11c) aufweist, an welcher die Magnete (12, 14) seitlich anliegen.

5. Verschliessvorrichtung nach Anspruch 4, dadurch gekennzeichnet, dass die Magnete (12, 14) in einem Bett aus aushärtendem Kunststoff eingegossen sind.

6. Verschliessvorrichtung nach Ansprüchen 4 und 5, dadurch gekennzeichnet, dass das Kunststoffbett ringförmig ausgebildet ist und sich von der Schulter (11c) bis zu einem ausserhalb der Magnete (12, 14) verlaufenden und die Magnete einschliessenden äusseren Rand erstreckt.

7. Verschliessvorrichtung nach einem der Ansprüche 2–6, dadurch gekennzeichnet, dass die Magnete (12, 14) wenigstens einer Kupplungsscheibe (11, 13) an der der anderen Kupplungsscheibe (11, 13) zugewandten Fläche mit einer magnetisch nichtleitenden Abdeckung (18) versehen ist.

8. Verschliessvorrichtung nach einem der vorangehenden Ansprüche, dadurch gekennzeichnet, dass die Magnete (12, 14) am Aussenumfang durch einen Ring (18a) umgeben sind.

9. Verschliessvorrichtung nach Ansprüchen 7 und 8, dadurch gekennzeichnet, dass der Ring (18a) am Umfang der Abdeckung (18) angeordnet ist.

10. Verschliessvorrichtung nach einem der Ansprüche 2 bis 9, dadurch gekennzeichnet, dass der Luftspalt (15) zwischen den Polen der jeweils gegenüberliegenden Magnete (12, 14) der beiden Kupplungsscheiben (11, 13) wenigstens das Sechsfache der Summe sämtlicher Axialtoleranzen sowie des axialen Lagerspiels zwischen Antriebsseite und Abtriebsseite beträgt.

**Claims**

1. A closure apparatus for screwing a plastics screw closure (16) on to a container which is provided with a screwthread, said apparatus on the one hand being drivable by a drive means and on the other hand being provided with a screw-on head (10) for screwing on the screw closure (16), wherein disposed between the screw-on head (10) and the drive means is a torque-limiting clutch (11, 13) which interrupts the screwing-on operation when a predeterminable reference torque is attained, wherein the clutch (11, 13) has a drive clutch member (13) and a driven clutch member (11) which is connected to the screw-on head (10), characterised in that the clutch members (11, 13) are arranged at a spacing from each other and, at the mutually facing surfaces, have permanent magnets (12, 14), the poles of which are so arranged that, in the unloaded condition, poles of opposite polarity are in mutually opposing relationship, and that the juxtaposed poles of a clutch member (11, 13) are also of opposite polarities.

2. A closure apparatus according to claim 1, characterised in that the clutch members (11, 13) are of a disc configuration.

3. A closure apparatus according to claim 2, characterised in that at least eight and preferably at least twelve magnets (12, 14) are arranged on each clutch disc (11, 13).

4. A closure apparatus according to claim 2 or claim 3, characterised in that the clutch disc (11, 13) has a concentrically extending shoulder (11c) against which the magnets (12, 14) laterally bear.

5. A closure apparatus according to claim 4, characterised in that the magnets (12, 14) are cast in a bed of setting plastics material.

6. A closure apparatus according to claim 4 and claim 5, characterised in that the plastics bed is of an annular configuration and extends from the shoulder (11c) to an outer edge which extends outside the magnets (12, 14) and which encloses the magnets.

7. A closure apparatus according to one of claims 2 to 6, characterised in that the magnets (12, 14) of at least one clutch disc (11, 13) is provided with a magnetically non-conductive covering (18) at the surface which is towards the other clutch disc (11, 13).

8. A closure apparatus according to one of the preceding claims, characterised in that the magnets (12, 14) are surrounded by a ring (18a) at the outer periphery.

9. A closure apparatus according to claim 7 and claim 8, characterised in that the ring (18a) is arranged at the periphery of the covering (18).

10. A closure apparatus according to one of claims 2 to 9, characterised in that the air gap (15) between the poles of the mutually oppositely disposed magnets (12, 14) of the two clutch discs (11, 13) is at least six times the sum of all axial tolerances and the axial bearing clearance between the drive side and the driven side.

**Revendications**

1. Dispositif de fermeture pour serrer une fermeture à vissage (16) en matière plastique sur un récipient pourvu d'un filetage, qui peut d'une part être entraîné par un dispositif d'actionnement et qui est d'autre part pourvu d'une tête (10) pour le vissage de la fermeture (16), dans lequel est interposé entre la tête de vissage (10) et le dispositif d'actionnement un accouplement à limite de couple (11, 13) qui interrompt la procédure de vissage lorsqu'un couple de rotation de consigne prédéterminé est atteint, l'accouplement (11, 13) comprenant une partie de couplage côté menant (13) et une partie de couplage côté mené (11) reliée à la tête de vissage (10), caractérisé en ce que les parties (11, 13) de l'accouplement sont montées à une certaine distance l'une de l'autre et en ce que leurs surfaces en regard comportent des aimants permanents (12, 14) dont les pôles sont disposés de telle manière que, dans l'état non chargé, les pôles ayant des polarités opposées sont en face les uns des autres, et en ce que les pôles adjacents d'une partie (11, 13) de l'accouplement présentent également des polarités opposées.

2. Dispositif de fermeture selon la revendication 1, caractérisé en ce que les parties (11, 13) de l'accouplement sont en forme de disques.

3. Dispositif selon la revendication 2, caractérisé en ce qu'au moins huit, de préférence au moins douze aimants (12, 14) sont montés sur chaque disque d'accouplement (11, 13).

4. Dispositif de fermeture selon la revendication 2 ou 3, caractérisé en ce que le disque d'accouplement (11, 13) présente un épaulement concentrique (11c) contre lequel les aimants (12, 14) s'appliquent latéralement.

5. Dispositif de fermeture selon la revendication 4, caractérisé en ce que les aimants (12, 14) sont coulés dans un lit de matière plastique durcissable.

6. Dispositif selon la revendication 4 et 5, caractérisé en ce que le lit de matière plastique a une forme annulaire et s'étend à partir de l'épaulement (11c) jusqu'à un bord extérieur s'étendant à l'extérieur des aimants (12, 14) et encerclant ces aimants.

7. Dispositif selon l'une des revendications 2 à 6, caractérisé en ce que les aimants (12, 14) de l'un au moins des disques d'accouplement (11, 13) est pourvu sur sa surface tournée vers l'autre disque d'accouplement (11, 13) d'un couvercle (18) non conducteur du point de vue magnétique.

8. Dispositif de fermeture selon l'une quelconque des revendications précédentes, caractérisé en ce que les aimants (12, 14) sont entourés à leur pourtour extérieur par un anneau (18a).

9. Dispositif de fermeture selon la revendication 7 et 8, caractérisé en ce que l'anneau (18a) est situé au pourtour du couvercle (18).

10. Dispositif de fermeture selon les revendications 2 à 9, caractérisé en ce que la largeur de l'intervalle d'air (15) entre les pôles des aimants respectivement opposés (12, 14) des deux disques d'accouplement (11, 13) s'élève au moins au sextuple de la somme de toutes les tolérances axiales, ainsi que du jeu axial des paliers entre le côté menant et le côté mené.

Fig.1

_Fig.2_

12

12a

18a

11c

_Fig.3_

18a    11c

12    11    18

## Fig. 4

## Fig. 5